(19) Europäisches Patentamt

European Patent Office

Office européen des brevets

(11) **EP 4 664 555 A1**

(12) **EUROPEAN PATENT APPLICATION**
published in accordance with Art. 153(4) EPC

(43) Date of publication:
**17.12.2025  Bulletin 2025/51**

(21) Application number: **24910145.2**

(22) Date of filing: **12.10.2024**

(51) International Patent Classification (IPC):
*H01M 4/48* (2010.01)    *C01B 32/168* (2017.01)
*C01B 33/32* (2006.01)    *C01B 33/22* (2006.01)
*C01B 33/26* (2006.01)    *B82Y 40/00* (2011.01)
*H01M 4/62* (2006.01)    *H01M 10/0525* (2010.01)
*C01B 33/02* (2006.01)    *C01B 33/12* (2006.01)
*C01B 33/20* (2006.01)    *C01B 32/21* (2017.01)
*C01B 32/184* (2017.01)    *C01B 32/05* (2017.01)

(52) Cooperative Patent Classification (CPC):
Y02E 60/10

(86) International application number:
**PCT/CN2024/124565**

(87) International publication number:
**WO 2025/139203 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **28.12.2023  CN 202311825124**

(71) Applicants:
• **BTR New Material Group Co., Ltd.**
  **Shenzhen, Guangdong 518106 (CN)**
• **Dingyuan New Energy Technology Co., Ltd.**
  **Huizhou, Guangdong 516227 (CN)**

(72) Inventors:
• **XIE, Wei**
  **Shenzhen, Guangdong 518106 (CN)**
• **DENG, Zhiqiang**
  **Shenzhen, Guangdong 518106 (CN)**
• **PANG, Chunlei**
  **Shenzhen, Guangdong 518106 (CN)**
• **REN, Jianguo**
  **Shenzhen, Guangdong 518106 (CN)**
• **HE, Xueqin**
  **Shenzhen, Guangdong 518106 (CN)**

(74) Representative: **Hautier IP - MC/EP**
  **17, avenue Albert II**
  **C/O The Office & Co - L'ALBU**
  **98000 Monaco (MC)**

(54) **NEGATIVE ELECTRODE MATERIAL AND PREPARATION METHOD THEREFOR, AND SECONDARY BATTERY**

(57)    The present disclosure relates to a field of batteries, particular to an anode material, a preparation method thereof, and a secondary battery, wherein the anode material includes a silicon-based active material and a matrix material; the anode material includes hydrogen element, halogen element, nitrogen element, and sulfur element, wherein a mass content of the hydrogen element is $m_H$, a mass content of the halogen element is $m_X$, a mass content of the sulfur element is $m_S$, and a mass content of the nitrogen element is $m_N$, and following relational expressions are satisfied: $0.02 \leq m_X/m_H \leq 5.00$, $0.0 \leq m_N/m_H \leq 20.00$, $0.05 \leq m_S/m_H \leq 5.00$. According to the technical solution, by adjusting the contents of the hydrogen element, the nitrogen element, the sulfur element and the halogen element within an appropriate range, the volume expansion of the anode material can be effectively inhibited, and capacity, initial coulombic efficiency, powder conductivity, cycle performance and rate performance of anode material are improved.

**(Cont. next page)**

FIG. 3

**Description**

**TECHNICAL FIELD**

The present disclosure relates to the technical field of batteries, and in particular to an anode material, a preparation method thereof and a secondary battery.

**BACKGROUND**

In recent years, lithium ion battery in the related art is widely used in electric vehicles and consumer electronics due to advantages of large energy density, high output power, long cycle life, and less environmental pollution. The anode material is one of the most critical component of the lithium ion batteries, and its structure and performance directly affect the electrochemical performance of the lithium ion battery. The silicon-based anode material is one of the most critical anode material for energy-dense lithium ion batteries, but the problems of large volume expansion, poor rate and the like of the traditional silicon-based anode material limit the wide application of the silicon-based anode material in lithium batteries.

In order to improve the volume expansion of the silicon-based material, the silicon material and the carbon material are generally compounded, but it is difficult for the pure carbon material coating layer to effectively isolate the interfacial side reaction between the electrolyte and the anode material, and in the process of preparing the anode slurry by using the silicon-based material, gas production is serious, and the volume expansion phenomenon of the material in the charging-discharging cycle process also affects the performance such as the cycle life of the anode material.

Therefore, how to improve the contact interface between the anode material and the electrolyte and alleviate the volume expansion of the anode material is still a technical problem to be solved currently.

**SUMMARY**

The present disclosure provides an anode material, a preparation method thereof and a secondary battery, which are beneficial to improving the stability of a solid-liquid contact interface of the anode material, relieving the volume expansion of the anode material, and improving the initial Coulombic efficiency and the cycle performance.

In a first aspect, an embodiment of the present disclosure provides an anode material, including a silicon-based active material and a matrix material, the anode material includes hydrogen element, halogen element, nitrogen element, and sulfur element, wherein a mass content of the hydrogen element is $m_H$, a mass content of the halogen element is $m_X$, a mass content of the sulfur element is $m_S$, and a mass content of the nitrogen element is $m_N$, and following relational expressions are satisfied: $0.02 \leq m_X/m_H \leq 5.00$, $0.02 \leq m_N/m_H \leq 20.00$, and $0.05 \leq m_S/m_H \leq 5.00$.

In some embodiments, the matrix material is formed on at least part of a surface of the silicon-based active material.

In some embodiments, the silicon-based active material is formed on a surface of the matrix material.

In some embodiments, the silicon-based active material and the matrix material are mutually dispersed.

In some embodiments, the anode material contains pores.

In some embodiments, in a pore volume distribution curve of the anode material, the anode material has a pore volume characteristic peak in ranges of 240Å to 280Å, 290Å to 320Å, 340Å to 390Å and 410Å to 460Å of the pore size, respectively.

In some embodiments, in the anode material, $50mg/kg \leq m_X \leq 1500mg/kg$.

In some embodiments, in the anode material, $100mg/kg \leq m_N \leq 4000mg/kg$.

In some embodiments, in the anode material, $10mg/kg \leq m_S \leq 200mg/kg$.

In some embodiments, the silicon-based active material includes at least one of elemental silicon, silicon oxide, silicon alloy, and silicate.

In some embodiments, the silicon-based active material includes silicon oxide, and the silicon oxide has a general formula of $SiO_x$, where $0 < x < 2$.

In some embodiments, the silicon-based active material includes a doping metal M, and M is selected from at least one of Li, Mg, Al, Fe, La, Zn, Ti, Cu, and Mn.

In some embodiments, the silicon-based active material includes a doping metal M, and a mass content of the metal M in the anode material is 0 wt.% to 15 wt.%, excluding 0 wt.%.

In some embodiments, the matrix material includes a carbon material or a mixture of a carbon material and an inorganic oxide.

In some embodiments, the matrix material includes a carbon material, the carbon material includes at least one of graphite, graphene, amorphous carbon, diamond-like carbon, carbon nanotube, and carbon fiber.

In some embodiments, the matrix material includes a carbon material, the carbon material is formed on at least part of a surface of the silicon-based active material to form a carbon layer, and a thickness of the carbon layer is 20 nm-1000 nm.

In some embodiments, based on the mass of the anode material, a mass content of the carbon element in the anode material is 0.5 wt.% to 15 wt.%.

In some embodiments, the anode material has a median particle size ranging from 2.0 $\mu$m to 12.0 $\mu$m.

In some embodiments, the anode material has a specific surface area ranging from 0.50 $m^2$/g to 10.00 $m^2$/g.

In some embodiments, the anode material has a tap density ranging from 0.75 $g/cm^3$ to 1.35 $g/cm^3$.

In some embodiments, the anode material has a powder conductivity ranging from 0.01 S/cm to 100.00 S/cm under a pressure of 20 kN.

In some embodiments, a mass content of water in the anode material is 0.01 wt.% to 0.80 wt.%.

In some embodiments, the anode material has a pH ranging from 6.00 to 12.00.

In a second aspect, the present disclosure further provides a method for preparing an anode material. The method includes following steps:

preparing a precursor, wherein the precursor includes a silicon-based active material and a matrix material; and performing surface modification treatment on the precursor by using plasma enhanced chemical vapor deposition in a modified gas phase source environment to obtain an anode material, wherein the modified gas phase source includes hydrogen element, sulfur element, nitrogen element and halogen element; in the anode material, a mass content of the hydrogen element is denoted as mH, a mass content of the halogen element is denoted as mX, a mass content of the sulfur element is denoted as mS, and a mass content of the nitrogen element is denoted as mN, and following relational expressions are satisfied: $0.02 \leq mX/mH \leq 5.00$, $0.02 \leq mN/mH \leq 20.00$, and $0.05 \leq mS/mH \leq 5.00$.

In a third aspect, the present disclosure further provides a secondary battery. The secondary battery includes the anode material described above, or includes the anode material prepared by the method described above.

Compared with the related art, the technical solution of the present disclosure has at least following technical effects.

In the anode material of the present disclosure, a mass content ratio of the hydrogen element, the nitrogen element, the sulfur element, and the halogen element in the anode material is adjusted to an appropriate range by exploring the content relationship of the hydrogen element to the nitrogen element, the sulfur element, and the halogen element, so that the powder conductivity, the initial Coulombic efficiency, and the cycle performance of the material are comprehensively improved. In the present disclosure, the anode material further contains an appropriate amount of halogen, N element and S element, and the appropriate amount of halogen element can also participate in forming a more stable solid electrolyte film (SEI film) when the electrolyte is in contact with the anode material, which can enhance the bonding strength of the anode material and the solid electrolyte film, and can maintain the stability of the solid-liquid contact interface on the surface of the anode material in the cyclic charging and discharging process, in addition, can better inhibit the expansion of the anode material, while the nitrogen element and the sulfur element are beneficial to improving the powder conductivity of the anode material, thereby improving the rate performance of the anode material. When the content relationship of the hydrogen element, the nitrogen element, the sulfur element and the halogen element in the anode material satisfies the above ratio relationship of the present disclosure, the infiltration performance of the anode material and the electrolyte can be improved, the solid-liquid regulation and control in the slurry mixing process of the anode material can be realized, the dispersion of the slurry is improved, the sedimentation or agglomeration of the slurry is reduced, the gas production in the slurry mixing process is inhibited, and it is helpful for the maintenance of the stability of the slurry. Therefore, the anode material provided by the present disclosure can have the advantages of high initial Coulombic efficiency, high powder conductivity, high cycle stability, low volume expansion rate and the like.

According to the method of the anode material provided by the present disclosure, the surface modification treatment is performed on the precursor containing the silicon-based active material and the carbon material by using plasma enhanced chemical vapor deposition in a modified gas source environment, various elements are efficiently and uniformly doped, the deposition efficiency is high, and the controllability is high. After surface modification treatment, the carbon material on the surface of the silicon-based active material can be combined with hydrogen element to form carbon hydrogen bond, and a moderate hydrocarbon saturation helps to adjust the hydrophilic performance of the material, so that the hydrophilic performance of the carbon material can be adjusted, and the infiltration degree of the electrolyte to the anode material is adjusted, so that the lithium ion conduction interface of the anode material and the electrolyte is smoother, the mass transfer/load transfer efficiency of the anode material is improved, and the low-temperature performance, thereby improving the powder conductivity and other performances of the anode material. An appropriate amount of halogen and the incorporation of N and S elements play a role in adjusting hydrocarbon saturation on one hand: the halogen and H have a competitive saturation relationship, and the halogen occupies an H site, so that the hydrocarbon saturation is regulated and controlled, and the nitrogen element and the sulfur element may be combined with the hydrogen element to form a local functional group such as an amino group, and also play a role in adjusting the hydrocarbon saturation. On the other hand, the halogen element can also participate in forming a more stable solid electrolyte film (SEI film) when the electrolyte is in contact with the anode material, which can enhance the bonding strength of the anode material and the solid electrolyte film, and can maintain the stability of the solid-liquid contact interface on the surface of the anode material in the cyclic charging and discharging process, in addition, can better inhibit the expansion of the anode material, while the nitrogen element and the sulfur element are beneficial to improving the powder conductivity of the anode material, thereby improving the rate performance of the anode material. Therefore, the surface of the anode material is modified through the modified gas phase source, so that the volume expansion of the anode material can be inhibited, and the electrochemical performance such as the initial Coulombic efficiency, the powder conductivity and the cycle performance of the anode material can be comprehensively improved.

## BRIEF DESCRIPTION OF DRAWINGS

The present disclosure will be further described with reference to the accompanying drawings and embodiments.

FIG. 1 is a FTIR diagram of an anode material according to an embodiment of the present disclosure;
FIG. 2 is a flow chart of a method for preparing an anode material according to an embodiment of the present disclosure;
FIG. 3 is a schematic diagram of a discharging state of a secondary battery according to an embodiment of the present disclosure.
FIG. 4 is a schematic diagram of pore volume distribution of an anode material according to Example 1 of the present disclosure.

## DESCRIPTION OF EMBODIMENTS

In order to better understand the technical solution of the present disclosure, embodiments of the present disclosure are described in detail below with reference to the accompanying drawings.

It is to be made clear that the described embodiments are only some rather than all of the embodiments of the present disclosure. All other embodiments obtained by those skilled in the art without creative efforts according to the embodiments of the present disclosure are within the scope of the present disclosure.

The terms used in the embodiments of the present disclosure are only for the purpose of describing specific embodiments, and are not intended to limit the present disclosure. The singular forms of "a", "the" and "this" used in the embodiments of the present disclosure and the appended claims are further intended to include the plurality form, unless the context clearly indicates other meanings.

It should be understood that the term "and/or" used herein is merely an association relationship describing an associated object, and indicates that there may be three relationships, for example, A and/or B, and may indicate: only A, both A and B, and only B. In addition, the character "/" herein generally means an "or" relationship between the associated objects.

The silicon-based anode material is one of the most critical materials for energy-dense lithium ion batteries. However, silicon-based negative electrode materials in the related art face issues such as large expansion and poor rate performance, which limits the widespread application in the lithium ion batteries.

In the existing related research, the G and D peaks of the carbon layer structure on the surface of the silicon-based anode material are mostly researched to improve the surface physicochemical properties of the silicon-based anode material, but it is still difficult to comprehensively solve the problems of the volume expansion and electrochemical performance of the silicon-based anode material.

In order to solve the above problems, in a first aspect, the present disclosure provides an anode material. The anode material includes a silicon-based active material and a matrix material. The silicon-based active material may be formed on at least a part of the surface of the matrix material, or the surface of the silicon-based active material where the matrix material is located, or the silicon-based active material and the matrix material may be mutually dispersed with each other. In some embodiments, the matrix material may include a carbon material or a mixture of a carbon material and an inorganic oxide.

The anode material includes hydrogen element, halogen element, nitrogen element, and sulfur element, wherein a mass content of the hydrogen element is $m_H$, a mass content of the halogen element is $m_X$ (when various halogen elements are included in the anode material, $m_X$ is the total mass content of the various halogen elements), a mass content of the sulfur element is $m_S$, and a mass content of the nitrogen element is $m_N$, and following relational expressions are satisfied: $0.02 \leq m_X/m_H \leq 5.00$, $0.02 \leq m_N/m_H \leq 20.00$, and $0.05 \leq m_S/m_H \leq 5.00$. In the anode material, the hydrogen element and the halogen element are mainly used as terminal elements of the matrix material, which can play a role in modifying the interface and structure of the anode material, and the nitrogen element and the sulfur element are mainly doped in the matrix material, which is beneficial to improving the electrochemical performance such as the rate performance, the powder conductivity and the early cycle stability of the anode material.

In some embodiments, a value of $m_X/m_H$ may be 0.02, 0.05, 0.1, 0.5, 0.8, 1, 2, 3, 4, or 5, or the like, and may be other value within the above range, which is not limited herein. An appropriate amount of halogen element helps to improve the conductivity of the anode material, and can participate in the formation of a solid-state electrolyte film (SEI film) on the surface of the anode material, improve the stability of the SEI film, and further inhibit the expansion of the anode material and improve the cycle performance of the anode material. Controlling the mass ratio of the halogen element to the hydrogen element within the above range can improve the capacity, the initial coulombic efficiency and the rate performance of the anode material. However, the excessive halogen element not only causes the interior of the matrix layer to be too loose, but also causes the specific surface area of the anode material to be increased, and also causes the electrochemical performance such as the capacity, the initial coulombic efficiency and the rate performance of the anode material to be reduced.

In some embodiments, a value of $m_N/m_H$ may be 0.02, 0.05, 0.1, 0.5, 0.8, 1, 2, 4, 8, 12, 16, 20, or the like, and may be other value within the above range, which is not limited herein. A value of $m_S/m_H$ may be 0.05, 0.1, 0.5, 0.8, 1, 1, 2, 3, 4, 5, or the like, and may be other value within the above range, which is not limited herein. The reasonable proportion of the nitrogen element, the sulfur element and the hydrogen element is regulated and controlled, so that the binding ability of the anode material and the lithium ions can be improved, which is beneficial to desolvation of lithium ions between interfaces, the lithium ions more easily enter the anode material, and the rate performance of the anode material is further improved. In addition, the nitrogen element and the sulfur element can greatly improve the powder conductivity of the anode material, which is beneficial to the improvement of the early cycle stability of the anode material.

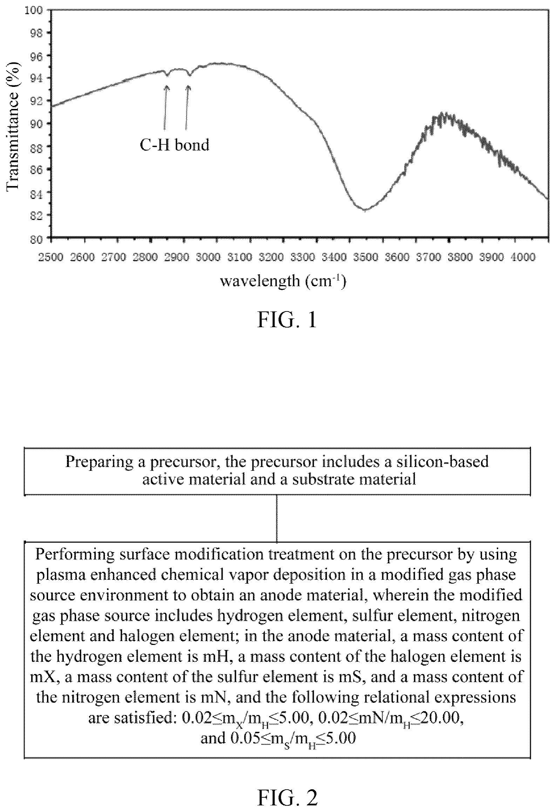

In some embodiments, chemical bonds such as C-H, O-H, C-Cl, C-F, C-Br, C-N, ON, C-S and S-O are formed after doping with the hydrogen element, the halogen element, the nitrogen element and the sulfur element. In the anode material of the present disclosure, a mass content ratio of the hydrogen element, the nitrogen element, the sulfur element, and the halogen element in the anode material is adjusted to an appropriate range by exploring the content relationship of the hydrogen element to the nitrogen element, the sulfur element, and the halogen element, so that the powder conductivity, the initial Coulombic efficiency, and the cycle performance of the material are comprehensively improved. In the anode material of the present disclosure, there are carbon-hydrogen bonds formed by combining hydrogen atoms and carbon atoms (as shown in FIG. 1), controlling the hydrocarbon saturation helps to adjust the hydrophilic performance of the material, improves the infiltration degree of the electrolyte to the material, so that the lithium ion conduction interface of the anode material and the electrolyte is smoother, the mass transfer/charge transfer efficiency of the anode material is improved, thereby improving the low-temperature performance, the powder conductivity and other performance of the anode material. In the present disclosure, the anode material further contains an appropriate amount of halogen, the N element and the S element, and on the one hand, the appropriate amount of halogen, the N element and the S element play a role in adjusting the hydrocarbon saturation: the halogen and H have a competitive saturation relationship, and the halogen occupies an H site, so that the hydrocarbon saturation is regulated and controlled, and the nitrogen element and the sulfur element may be combined with the hydrogen element to form a local functional group such as an amino group, and also play a role in regulating and controlling the hydrocarbon saturation; on the other hand, the halogen element can also participate in forming a more stable solid electrolyte film (SEI film) when the electrolyte is in contact with the anode material, which can enhance the bonding strength of the anode material and the solid electrolyte film, and can maintain the stability of the solid-liquid contact interface on the surface of the anode material in the cyclic charging and discharging process, in addition, can better inhibit the expansion of the anode material, while the nitrogen element and the sulfur element are beneficial to improving the powder conductivity of the anode material, thereby improving the rate performance of the anode material. When the content relationship of the hydrogen element, the nitrogen element, the sulfur element and the halogen element in the anode material satisfies the above ratio relationship of the present disclosure, the infiltration performance of the anode material and the electrolyte can be improved, the solid-liquid regulation and control in the slurry mixing process of the anode material can be realized, the dispersion of the slurry is improved, the sedimentation or agglomeration of the slurry is reduced, the gas production in the slurry mixing process is inhibited, and it is helpful for the maintainance of the stability of the slurry. Therefore, the anode material provided by the present disclosure can have the advantages of high initial Coulombic efficiency, high powder conductivity, high cycle stability, low volume expansion rate and the like. It should be noted that, through the research, exploration and data verification of the applicant, regardless of the specific forms of the halogen element, the nitrogen element and the sulfur element, the technical problem to be solved by the present disclosure can be solved as long as the above relationships are satisfied.

In some embodiments, in the anode material, $50mg/kg \leq m_X \leq 1500mg/kg$, that is, a mass of the halogen element contained in each kilogram of the anode material may be 50 mg, 150 mg, 300 mg, 600 mg, 900 mg, 1200 mg, 1500 mg, or the like, and may be other value within the above range, which is not limited herein. By controlling the content of the halogen element in the anode material, the initial Coulombic efficiency, the rate performance and the cycle performance of the anode material are further improved, and the expansion of the anode material is further inhibited.

In some embodiments, in the anode material, $100mg/kg \leq m_N \leq 4000mg/kg$, that is, a mass of the nitrogen element contained in each kilogram of the anode material may be 100 mg, 500 mg, 1000 mg, 2000 mg, 4000 mg, or the like, and may be other value within the above range, which is not limited herein. By controlling the content of the nitrogen element in the anode material, the initial Coulombic efficiency, the rate performance and the cycle performance of the anode material are further improved, and the expansion of the anode material is further inhibited.

In some embodiments, in the anode material, $10mg/kg \leq m_S \leq 200mg/kg$, that is, a mass of the sulfur element contained in each kilogram of the anode material may be 10 mg, 30 mg, 50 mg, 80 mg, 100 mg, 120 mg, 150 mg, 180 mg and 200 mg, or the like, and may be other value within the above range, which is not limited herein. By controlling the content of sulfur element in the anode material, the capacity, the initial Coulombic efficiency and the rate performance of the anode material can be improved.

In some embodiments, the anode material contains pores, and the pores in the anode material can reserve a buffer space for the volume expansion of the silicon-based active material, reduce the phenomena such as particle crushing and cracking caused by the volume expansion, and improve the cycle stability of the anode material.

In some embodiments, in the pore volume distribution curve of the anode material, the anode material has a pore volume characteristic peak in the ranges of 240Å to 280Å, 290Å to 320Å, 340Å to 390Å or 410Å to 460Å of the pore size, respectively; that is, in the pore volume distribution curve of the anode material, the anode material has a pore volume characteristic peak corresponding to 240 Å, 250 Å, 260 Å, 270 Å, 280 Å or any value between them, at 290 Å, 300 Å, 310 Å, 320 Å or any value between them, at 340 Å, 350 Å, 360 Å, 370 Å, 380 Å, 390 Å or any value between them, and at 410 Å, 420 Å, 430 Å, 440 Å, 450 Å, 460 Å or any value between them of the pore size. The composition difference and the hydrocarbon saturation difference of elements in the material affect the morphology of the material, in the present disclosure, the mass content ratio of the hydrogen element, the nitrogen element, the sulfur element and the halogen element in the anode material is controlled within an appropriate range, so that the local structure grows longitudinally to form the unique pore structure, and the electrochemical performance such as the rate performance and the cycle stability of the anode material can be improved.

In some embodiments, the anode material has a median particle size ranging from 2.0 $\mu$m to 12.0 $\mu$m, e.g., 2.0$\mu$m, 4.0$\mu$m, 6.0$\mu$m, 8.0$\mu$m, 10.0$\mu$m or 12.0$\mu$m, or the like, and may be other value within the above range, which is not limited herein.

In some embodiments, the silicon-based active material includes at least one of elemental silicon, silicon oxide, silicon alloy and silicate; that is, the silicon-based active material may be independently composed of any one of elemental silicon, silicon oxide, silicon alloy or silicate, or may be composed of two or more of elemental silicon, silicon oxide, silicon metal or silicate.

In the above embodiment, the general formula of the silicon oxide is $SiO_x$, where $0 < x \leq 2$, and more generally, the silicon oxide may be a mixture of various silicon oxide compounds, for example, a mixture of silicon oxide and silicon monoxide.

In some embodiments, the silicon-based active material further includes a doping metal M, and M is selected from at least one of Li, Mg, Al, Fe, La, Zn, Ti, Cu, and Mn. Specifically, the doping metal M may be present in a silicon alloy or silicate. The silicate may be a monosilicate (containing one metal ion), for example, lithium silicate, magnesium silicate, aluminum silicate, iron silicate, or the like, or a binary silicate (containing two metal ions), for example, lithium magnesium silicate, lithium aluminum silicate, lithium zinc silicate, or the like, and may be ternary silicates (containing three metal ions), for example, lithium aluminum titanium silicate, lithium magnesium aluminum magnesium silicate, or the like, which is not limited thereto. In a specific embodiment, the silicon-based active material includes a doping metal Mg and/or a doping metal Li.

In some embodiments, a mass content of the metal M in the anode material is 0 wt.% to 15 wt.%, excluding 0 wt.%, e.g., 0.000001 wt.%, 1 wt.%, 5 wt.%, 10 wt.%, 15 wt.%, or the like, and may be other value within the above range, which is not limited herein.

In some embodiments, a mass content of the carbon element in the anode material is 0.5 wt.% to 15 wt.%, e.g., 0.5 wt.%, 1 wt.%, 5 wt.% or 10 wt.%, 15 wt.%, or the like, and may be other value within the above range, which is not limited herein.

In some embodiments, the carbon material includes at least one of graphite, graphene, amorphous carbon, diamond-like carbon, carbon nanotube, and carbon fiber.

In some embodiments, when the carbon material is amorphous carbon, the anode material may include nitrogen-doped amorphous carbon, chlorine-doped amorphous carbon, bromine-doped amorphous carbon, iodine-doped amorphous carbon, sulfur-doped amorphous carbon, or the like.

In some embodiments, the carbon material forms a carbon layer on the surface of the silicon-based active material, and a thickness of the carbon layer ranges from 20 nm-1000 nm, e.g., 20 nm, 100 nm, 200 nm, 400 nm, 800 nm, 1000 nm, or the like, and may be other value within the above range, which is not limited herein.

In some embodiments, the inorganic oxide includes a metal oxide of aluminum (Al), titanium (Ti), vanadium (V), chromium (Cr), niobium (Nb), molybdenum (Mo), yttrium (Y), lanthanum (La), cerium (Ce), lithium (Li), or a multiple metal oxide of a combination of multiple elements.

In some embodiments, the inorganic oxide may also include single or multiple silicates, phosphates, titanates that are fomed by aluminum (Al), titanium (Ti), vanadium (V), chromium (Cr), niobium (Nb), molybdenum (Mo), yttrium (Y), lanthanum (La), cerium (Ce), lithium (Li), or the like with phosphorus (P), silicon (Si), titanium (Ti), or the like.

In some embodiments, the anode material has a tap density ranging from 0.75 g/cm$^3$ to 1.35 g/cm$^3$, e.g., 0.75 g/cm$^3$, 0.95 g/cm$^3$, 1.05 g/cm$^3$, 1.35 g/cm$^3$, or any value between them, the tap density of the anode material may also be higher than 1.35 g/cm$^3$, the higher the tap density is, the better the energy density of the material, which is not particularly limited in the present disclosure.

In some embodiments, the anode material has a powder conductivity ranging from 0.01 S/cm to 100.00 S/cm, e.g., 0.01S/cm, 10.00 S/cm, 40.00S/cm, 60.00 S/cm, 80.00 S/cm, 100.00 S/cm, or any value between them under a pressure of 20 kN, the powder conductivity of the anode material may also be higher than 100.00 S/cm, and the higher the powder conductivity is, the better the electrochemical performance of the material, which is not particularly limited in the present disclosure.

In some embodiments, the anode material has a specific surface area ranging from 0.50 m$^2$/g to 10.00 m$^2$/g, e.g., 0.80 m$^2$/g, 1.00 m$^2$/g, 1.50 m$^2$/g, 2.00 m$^2$/g, 3.00 m$^2$/g, 4.00 m$^2$/g, 5.00 m$^2$/g, 8.00 m$^2$/g or 10.00 m$^2$/g, or the like, and may be other value within the above range, which is not limited herein. Controlling the specific surface area of the anode material within the above range can slow down the volume expansion of the anode material, which is beneficial to the improvement of the cycle performance of the anode material.

In some embodiments, a mass content of water in the anode material ranges from 0.01 wt.% to 0.80 wt.%, e.g., 0.01%, 0.10%, 0.40%, 0.60%, 0.80% or any value between them, the lower the mass content of water in the anode material, the better the electrochemical performance of the material, which is not particularly limited in the present disclosure.

In some embodiments, the anode material has a pH ranging from 6.00 to 12.00, e.g., 6.00, 8.00, 9.00, 10.00, 11.00 or 12.00, or the like, and may be other value within the above range, which is not limited herein. Preferably, the anode material has a pH ranging from 7 to 10.

In a second aspect, the present disclosure provides a method for preparing the anode material, as shown in FIG.2. The method includes following steps:

S100, preparing a precursor, wherein the precursor includes a silicon-based active material and a matrix material; and

S200, performing surface modification treatment on the precursor by using plasma enhanced chemical vapor deposition in a modified gas phase source environment to obtain an anode material, wherein the modified gas phase source includes hydrogen element, sulfur element, nitrogen element and halogen element; in the anode material, a mass content of the hydrogen element is denoted as $m_H$, a mass content of the halogen element is denoted as $m_X$, a mass content of the sulfur element is denoted as $m_S$, and a mass content of the nitrogen element is denoted as $m_N$, and following relational expressions are satisfied: $0.02 \leq m_X/m_H \leq 5.00$, $0.02 \leq m_N/m_H \leq 20.00$, and $0.05 \leq m_S/m_H \leq 5.00$. According to the method of the anode material provided by the present disclosure, the surface modification treatment is performed on the precursor containing the silicon-based active material and the matrix material by using plasma enhanced chemical vapor deposition in a modified gas source environment, various elements are efficiently and uniformly doped, the deposition efficiency is high, and the controllability is high. After surface modification treatment, the matrix material on the surface of the silicon-based active material can be combined with hydrogen element to form carbon hydrogen bond, and a moderate hydrocarbon saturation may help to adjust the hydrophilic performance of the material, so that the hydrophilic performance of the matrix material can be adjusted, and the infiltration degree of the electrolyte to the anode material is adjusted, so that the lithium ion conduction interface of the anode material and the electrolyte is smoother, the mass transfer/load transfer efficiency of the anode material is improved, and the low-temperature performance, thereby improving the powder conductivity and other performances of the anode material. An appropriate amount of halogen and the incorporation of N and S elements play a role in adjusting hydrocarbon saturation on one hand: the halogen and H have a competitive saturation relationship, and the halogen occupies an H site, so that the hydrocarbon saturation is regulated and controlled, and the nitrogen element and the sulfur element may be combined with the hydrogen element to form a local functional group such as an amino group, and also play a role in adjusting the hydrocarbon saturation; on the other hand, the halogen element can also participate in forming a more stable solid electrolyte film (SEI film) when the electrolyte is in contact with the anode material, which can enhance the bonding strength of the anode material and the solid electrolyte film, and can maintain the stability of the solid-liquid contact interface on the surface of the anode material in the cyclic charging and discharging process, in addition, can better inhibit the expansion of the anode material, while the nitrogen element and the sulfur element are beneficial to improving the powder conductivity of the anode material, thereby improving the rate performance of the anode material. Therefore, the surface of the anode material is modified through the modified gas phase source, so that the volume expansion of the anode material can be inhibited, and the electrochemical performance such as the initial Coulombic efficiency, the powder conductivity and the cycle performance of the anode material can be comprehensively improved.

The preparation method of the present disclosure will be described below with reference to the following embodiments.

S100, a precursor is prepared, the precursor includes a silicon-based active material and a matrix material.

In some embodiments, steps of preparing the precursor include: coating at least part of the surface of the silicon-based active material with a matrix material.

In some embodiments, the preparation steps of the precursor include: the silicon-based active material and the matrix material are solid-phase coated.

In some embodiments, the matrix material includes a carbon material or a mixture of a carbon material and an inorganic oxide. In some embodiments, the carbon material includes at least one of graphite, graphene, amorphous carbon, diamond-like carbon, carbon nanotube, and carbon fiber.

In some embodiments, the inorganic oxide includes a metal oxide of aluminum (Al), titanium (Ti), vanadium (V), chromium (Cr), niobium (Nb), molybdenum (Mo), yttrium (Y), lanthanum (La), cerium (Ce), lithium (Li), or a multiple metal oxide of a combination of multiple elements.

In some embodiments, the inorganic oxide may also include single or multiple silicates, phosphates, titanates that are formed by aluminum (Al), titanium (Ti), vanadium (V), chromium (Cr), niobium (Nb), molybdenum (Mo), yttrium (Y), lanthanum (La), cerium (Ce), lithium (Li), or the like with phosphorus (P), silicon (Si), titanium (Ti), or the like.

In some embodiments, the step of solid-phase coating the silicon-based active material and the carbon material includes: ball-milling the silicon-based material and a solid carbon source (such as asphalt), then performing the high-temperature treatment, to realize the coating of the carbon material to the silicon-based active material.

In some embodiments, the preparation steps of the precursor include: gas-phase carbon coating of the silicon-based active material under gas-phase carbon source.

In some embodiments, the gas-phase carbon source includes at least one of methane, ethane, ethylene, propane, and propylene.

In some embodiments, the gas phase carbon coating has a temperature ranging from 600 to 1000 °C, and has a heat preservation time ranging from 1h to 48h; those skilled in the art can adjust the reaction time according to the type of carbon source gas, flow rate, deposition temperature and target carbon amount.

In some embodiments, a mass content of the carbon material in the precursor is between 1 wt.% to 10 wt.%, preferably between 2 wt.% to 7 wt.%.

In some embodiments, the silicon-based active material includes at least one of elemental silicon, silicon oxide, silicon alloy, and silicate.

In some embodiments, the silicon-based active material includes a doping metal M, M is selected from at least one of Li, Mg, Al, Fe, La, Zn, Ti, Cu, and Mn.

In some embodiments, the steps of gas phase carbon coating the silicon-based active material, the preparation steps of the precursor include: crushing and sieving the coated product.

In some embodiments, after S100, the method further includes purifying the precursor to remove impurities in the precursor.

In some embodiments, steps of the purification treatment include: washing and drying the precursor.

In some embodiments, the washing treatment may include washing, soaking and centrifuging; specifically, the precursor is washed with deionized water, so that impurities on the surface of the precursor can be washed away, and then the impurities in the interior or pores of the precursor can be removed by soaking and centrifuging the precursor, which helps to ensure that the reaction rate of hydrogen (sulfur, nitrogen or halogen) between the precursor particles is consistent, so that the hydrogen content (nitrogen content, sulfur content and halogen content) between different particles is small.

In some embodiments, for consideration of cost and washing effect, the washing is performed by using deionized water, and other suitable detergents may also be used for washing.

In some embodiments, for consideration of cost and soaking effect, soaking is performed in deionized water; and other suitable soaking solutions may also be used for soaking the silicon-based active material coated with the carbon material; in this embodiment, preferably, a mass ratio of the material liquid in the soaking process is (0.5-1.5): (1.5-2.5), if the ratio is too large, the soaking effect is not ideal, and if the ratio is too small, the soaking solution (deionized water) is wasted.

In some embodiments, the drying is vacuum drying to reduce the drying temperature as much as possible, and low-temperature vacuum drying is used to effectively control the surface oxidation degree of the material, which is beneficial to improving the reaction efficiency of hydrogen (sulfur, nitrogen or halogen) of the precursor.

In some embodiments, the centrifugation time is 30 min to 360 min, e.g., 30 min, 90 min, 150 min, 200 min, 250 min, 300 min or 360 min, or the like, and may be other value within the above range, which is not limited herein.

In some embodiments, the drying temperature is 45 °C to 80 °C, e.g., 45°C, 50°C, 60°C, 70°C or 80°C, or the like, and may be other value within the above range, which is not limited herein; the drying time is 3h to 48h, e.g., 3h, 10h, 20h, 30h, 40h or 48h, or the like, and may be other value within the above range, which is not limited herein.

S200, surface modification treatment is performed on the precursor by using plasma enhanced chemical vapor deposition in a modified gas phase source environment to obtain an anode material. The modified gas phase source includes hydrogen element, sulfur element, nitrogen element and halogen element; the anode material contains the hydrogen element, the halogen element, the nitrogen element, and the sulfur element, wherein a mass content of the hydrogen element is $m_H$, a mass content of the halogen element is $m_X$, a mass content of the sulfur element is $m_S$, and a mass content of the nitrogen element is $m_N$, and following relational expressions are satisfied: $0.02 \leq m_X/m_H \leq 5.00$, $0.02 \leq m_N/m_H \leq 20.00$, $0.05 \leq m_S/m_H \leq 5.00$.

In some embodiments, the precursor has a powder conductivity ranging from 0.001 S/cm to 0.1 S/cm, e.g., 0.001 S/cm, 0.005 S/cm, 0.01 S/cm, 0.05 S/cm or 0.1 S/cm, or the like under the pressure of 20 KN, and may also be other value within the above range, which is not limited herein; the anode material has a powder conductivity ranging from under 0.1 S/cm to 100.0 S/cm, e.g., 0.1 S/cm, 1 S/cm, 10 S/cm, 50 S/cm or 100 S/cm, or the like under the pressure of 20 KN, and certainly may also be other values within the above range, which is not limited herein.

In some embodiments, in the pore volume distribution curve of the anode material, the anode material has a pore volume characteristic peak in the ranges of 240Å to 280Å, 290Å to 320Å, 340Å to 390Å or 410Å to 460Å of the pore size, respectively; that is, in the pore volume distribution curve of the anode material, the anode material has a pore volume characteristic peak at 240 Å, 250 Å, 260 Å, 270 Å, 280 Å or any value between them, at 290 Å, 300 Å, 310 Å, 320 Å or any value between them, at 340 Å, 350 Å, 360 Å, 370 Å, 380 Å, 390 Å or any value between them, and at 410 Å, 420 Å, 430 Å, 440 Å, 450 Å, 460 Å or any value between them of the pore size. The deposition conditions such as the composition difference, the deposition method and the deposition rate of the modified gas phase source in the deposition process can affect the morphology of the material, the mass content ratio of the hydrogen element, the nitrogen element, the sulfur element and the halogen element in the modified gas phase source is controlled within the proper range, and the deposition conditions such as the deposition rate are controlled to be within the proper range, so that the surface layer of the material takes the carbon element as a matrix, and the local structure grows longitudinally to form the unique mesoporous structure.

In some embodiments, steps of S200 are as follows: vacuumizing, placing the precursor under a modified gas phase source, and performing plasma enhanced chemical vapor deposition on the precursor under a bias voltage condition. By regulating and controlling the modified gas phase sources with different gas compositions and introducing a bias voltage, the deposition efficiency of hydrogen element, halogen element, nitrogen element and sulfur element on a precursor can be effectively controlled, so that the morphology, powder conductivity, rate performance, cycle performance, initial Coulombic efficiency, low-temperature performance, or the like of the finally obtained anode material final product are controlled.

In some embodiments, the bias voltage ranges from -500V to 0V, excluding 0V, e.g., -500V, -400V, -300V, -200V, -100V, - 50V, - 0.1V, or the like, and may be other value in the above range, which is not limited herein.

In some embodiments, the pressure of the vacuum is less than 1.0Torr before performing the plasma enhanced chemical vapor deposition.

In some embodiments, an operating pressure of the plasma enhanced chemical vapor deposition is 500 Pa to 5000 Pa, e.g., 500 Pa, 1000 Pa, 2000 Pa, 3000 Pa, 4000 Pa or 5000 Pa, or the like, and may be other value within the above range, which is not limited herein. By selecting the surface treatment efficiency within this range and controlling the plasma treatment intensity, the specific surface area of the anode material is within the preferred range.

In some embodiments, a deposition temperature of the plasma enhanced chemical vapor deposition ranges from 200°C to 800°C, e.g., 200°C, 300°C, 400°C, 500°C, 600°C, 700°C or 800°C, or the like, and may be other value within the above range, which is not limited herein. By selecting a reasonable treatment temperature, the silicon-based core of the anode material can be controlled as a preferred crystal form.

In some embodiments, the modified gas phase source has a flow rate ranging from 200 ml/min to 5000 ml/min, e.g., 200 ml/min, 300 ml/min, 400 ml/min or 5000 ml/min, or the like, and may be other value within the above range, which is not limited herein. The proportion of related elements is controlled by selecting a reasonable flow rate to control the processing amount of the modified source.

In some embodiments, the modified gas phase source includes a reaction gas, the reaction gas includes hydrogen gas, nitrogen-containing gas, sulfur-containing gas, and halogen source gas; specifically, the nitrogen-containing gas may be one or more of nitrogen gas and ammonia gas, the sulfur-containing gas may be hydrogen sulfide, and the halogen source gas may be one or more of fluorine gas, chlorine gas, bromine gas, iodine, hydrogen bromide, hydrogen iodide, and carbon tetrafluoride, when the modified gas phase source includes iodine, the added iodine raw material may be gaseous or solid, preferably, the added iodine raw material is solid iodine, so as to control the addition amount of iodine, and the solid iodine is easily sublimated into a gaseous state and mixed with other gas components in the modified gas phase source; those skilled in the art may also select other types of nitrogen-containing gases, sulfur-containing gases, and halogen source gases, as long as it is convenient to deposit the nitrogen element, the sulfur element, and the halogen element on the precursor.

In some embodiments, the modified gas phase source further includes a protective gas, and the protective gas includes one or more of argon, krypton, nitrogen, neon, and helium.

In some embodiments, the volume ratio of the hydrogen gas to the shielding gas is 1: (0.1 to 5), e.g., 1: 0.1, 1: 1, 1: 2, 1: 3, 1: 4, 1: 5 and other value within the above range, and the volume ratio of the hydrogen gas to the protective gas is selected within this range, which is beneficial to regulating and controlling the H content within the preferred range.

In some embodiments, the volume ratio of hydrogen to nitrogen-containing gas is 1: (0 to 1.2), e.g., 1: 0.05, 1: 0.1, 1: 0.3, or other value within the above range.

In some embodiments, the volume ratio of hydrogen to sulfur-containing gas is 1: (0 to 0.2), e.g., 1: 0.01, 1: 0.03, 1: 0.05, 1: 0.15, 1: 0.20, or other value within the above range.

In some embodiments, the volume ratio of the hydrogen gas to the halogen source gas is 1: (0 to 0.05), e.g., 1: 0.015, 1: 0.01, 1: 0.03, 1: 0.05, and may be other value within the above range.

In some embodiments, after step S200, the preparation method further includes sieving the modified product to obtain the anode material final product with a target particle size.

In a third aspect, the present disclosure provides a secondary battery (for example, a lithium ion battery, a sodium ion battery, or the like), including a shell, an electrode assembly, and an electrolyte. The electrode assembly and electrolyte are both located within the shell.

The shell may be a packaging bag obtained by packaging with a packaging film (for example, an aluminum-plastic film), for example, the secondary battery is a pouch cell. In some other embodiments, the secondary battery may also be a steel shell battery, an aluminum shell battery, or the like.

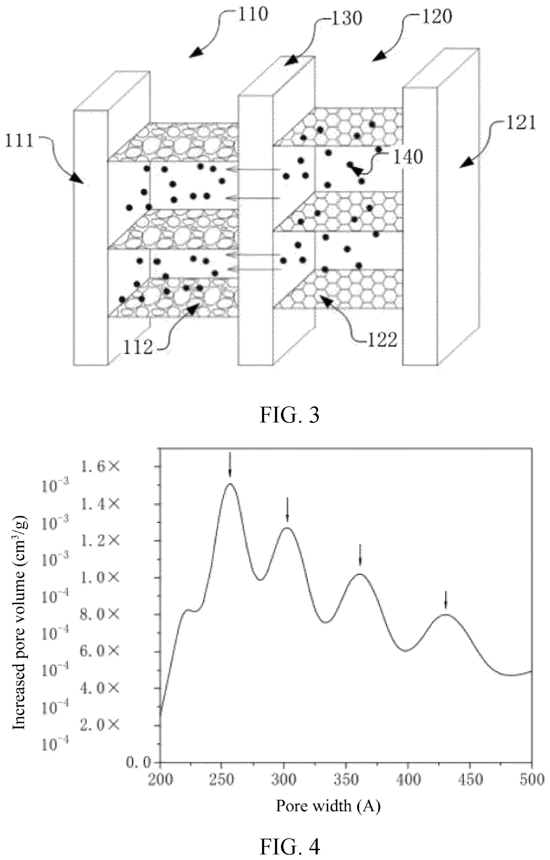

FIG. 3 shows a schematic diagram of a battery in a discharging state, that is, during operation. As shown in FIG. 3, the electrode assembly includes a positive electrode plate 110, an anode plate 120 and a separator 130. The electrode assembly may be a laminated structure, which is formed by alternately sequentially laminating the positive electrode plate, the separator and the anode plate. In other embodiments, the electrode assembly may also be a rolling structure, which is formed by sequentially laminating the positive electrode plate, the separator and the anode plate and then rolling.

Positive Electrode Plate

The positive electrode plate 110 includes a positive electrode current collector 111 and a positive electrode active layer 112 disposed on at least one surface of the positive electrode current collector. The positive electrode current collector may be aluminum foil or nickel foil, or the like, and may be any composite current collector disclosed in the related art, for example, but not limited to a current collector formed by combining the above conductive foil and a polymer matrix. The positive active layer includes a positive active material, the positive active material includes compounds that reversibly intercalate and deintercalate metal ions. In some embodiments, the positive active material may include a lithium transition metal composite oxide, a sodium transition metal composite oxide, or the like. The lithium transition metal composite oxide contains lithium and at least one element selected from cobalt, manganese and nickel. In some embodiments, the positive active material may include, but is not limited to, at least one of lithium cobalt oxide ($LiCoO_2$), lithium nickel manganese cobalt ternary material (NCM), lithium manganate ($LiMn_2O_4$), lithium nickel manganate ($LiNi_{0.5}Mn_{1.5}O_4$), or lithium iron phosphate ($LiFePO_4$).

Anode Plate

An anode plate 120 includes an anode current collector 121 and an anode active material layer 122 disposed on at least one surface of the anode current collector. The anode electrode current collector may be at least one of copper foil, nickel foil, stainless steel foil, titanium foil, carbon-based current collector, or the like, and may be any composite current collector disclosed in the related art, for example, but not limited to a current collector formed by combining the above conductive foil and a polymer matrix. The anode active material layer includes an anode material.

During operation of the battery, that is, when the battery is in a discharging state, metal ions 140 (for example, lithium ions) in the anode electrode are separated from the crystal lattice of the anode material, and are embedded into the crystal lattice of the positive electrode material by passing the electrolyte through the separator 130.

Conversely, when the battery is charged by applying an external circuit, oxidation of the positive electrode material causes metal ions (for example, lithium ions) in the positive electrode to be separated from the crystal lattice of the positive electrode material, and move to the anode electrode through the separator through the electrolyte; in addtion, the anode material undergoes a reduction reaction, causing the metal ions to be embedded into the crystal lattice of the anode material.

As the metal ions reciprocate between the positive electrode and the anode electrode, the battery can achieve the discharging and charging process in thousands of cycles.

It will be appreciated by those skilled in the art that the anode material described above and battery preparation methods are merely embodiments. Other methods commonly used in the art may be employed without departing from the scope of the present disclosure.

The embodiments of the present disclosure are further illustrated by following several embodiments. The embodiments herein are not limited to the specific embodiments described below. Variations may be made appropriately without changing the scope of the independent claims.

Test Methods:

1. Particle Size: the particle size was measured using Mastersizer 3000 laser diffraction technique. The particle size measurement was accomplished by measuring the intensity of the scattered light as the laser beam passes through the dispersed particle sample. The data was then used to analytically calculate the particle size distribution forming the scatter spectrum. D50: the corresponding particle size when the cumulative volume granularity distribution percentage of one sample reaches 50%. Its physical signifimayce is that particles with a particle size larger than the particle size account for 50%, and particles with a particle size smaller than the particle size account for 50%, D50 also called median particle size. The D90 particle size, the D50 particle size, and the D10 particle size are respectively the equivalent size (average particle size) of the largest particle when the cumulative distribution is 90%, 50%, and 10% in the distribution curve.

2. Specific Surface Area: the specific surface area was measured using a American Micrometrics TriStar 3000 BET surface area and pore size analyzer.

3. Tap Density: a Betters tap density tester was used, and a certain amount of sample was weighed and vibrated at 300 times/min for 3000 times to test the tap density.

4. Coating layer (carbon layer) thickness: the material was cut by a FIB-SEM device, and the average thickness of the coating layer was measured in SEM.

5. Powder Conductivity: the volume resistivity of the anode material powder was tested by a four-probe method. The resistance of the powder at five pressure points of 4 KN, 8 KN, 12 KN, 16 KN and 20 KN was tested by using an instrument, and then a computer automatically calculates the conductivity and resistivity of the anode material powder.

6. Test of the Water Mass Content of the Anode Material: a gravimetric test was used, the material was placed in a vacuum oven at 250 °C, and after baking and drying for 48h, the weight reduction before and after baking was checked and converted into moisture.

7. pH Test of the Anode Material: 5g of material was mixed with 45g of deionized water and subjected to ultrasonic treatment for 30 min, then an electronic pH meter was used for testing.

8. Pore Capacity: tests were performed using a BET micropore ratio meter and a pore size analyzer according to device corresponding test guidelines.

9. Test of Element Content:

Test of Nitrogen Content and Hydrogen Content: test was performed using a ONH2000 oxygen nitrogen hydrogen element analyzer. After the sample and the fluxing agent were added into the graphite crucible to be electrified, the graphite crucible was heated to the maximum 3000 °C for melting, and N and H were generated by high-temperature pyrolysis. They were fed into the heat conduction cell by carrier gas for measurement. The single test amount was $10 \pm 1$ mg, the fluxing agent was nickel foil, the test recalibration channel was High N/H, the degassing time was 30s, the degassing power was 5KW, the flushing time was set to 20s, the stable time was set to 40s, the infrared integration delay was set to 2s, the analysis time was 60s, and the analysis power was 4kw. The samples were tested twice, averaged, and retained 4 decimal.

Sulfur Content Test: an Eltra infrared carbon sulfur analyzer CS i was used for testing. A certain amount of sample was weighed and added into a ceramic crucible, a fluxing agent was added, entered a high-frequency furnace, high-purity oxygen was subjected to combustion, carbon dioxide and sulfur dioxide were generated, and the content of carbon and sulfur in gas was measured through an infrared detector. The fluxing agent was a multi-element fluxing agent, the sample injection amount was 50 g, the blank analysis time was 40s, the furnace body flushing time was 2s, the furnace body flushing gas flow is 180 L/h, the stabilization time is 45-60s, and the carrier gas flow rate was analyzed to be 180 L/h.

Halogen Ion Content Detection: test was performed according to GB/T24533-2019 using device ICS-6000, the concentration of eluent was 25 nM, the flow rate was 0.30 mL/min, the weighing amount was 0.7 g, the ultrasonic time was 3 min, and the sample was treated with natural sedimentation. $0.7 \pm 0.01$ g of the sample was accurately weighed, 50 ml of water was added for primary dispersion, manually dispersed and stirred for 5 min, then ultrasonicated for 3 min with an ultrasonic power of 240W.

10. Electrical Performance Test

A button battery was assembled with reference to the operation instruction BTRTC/ZY /01-020 "Button Battery Method Operation Instruction" of BTR Company, wherein the electrode was a metal lithium sheet, the diaphragm was a PP-PE-PP composite film, and the diameter was 19.2 mm; the electrolyte component ratio was EC/EMC/DMC = 1/1/1, and the concentration of lithium salt (LiPF6) was 1.05 mol/L.

Capacity Test: the anode materials prepared in the embodiments and comparative examples were prepared into batteries, the button battery charging and discharging apparatus was used as follows: the 0.1C constant current was charged to 10 mV to 0.02C constant current was charged to 5mV, 0.1C constant current was discharged to 1.5V cut-off.

50-Cycle Half-Battery Test: the anode materials prepared in the embodiments and comparative examples were prepared into batteries, the button battery charging and discharging apparatus was used as follows: in a first cycle, 0.1C was discharged to 0.01V, 0.01C was stepwise discharged to 0.01V, 0.01C was discharged to 0.005V, and 0.1C was charged to 1.5V; in a second cycle, 0.2C was discharged to 0.01V, 0.02C was stepwise discharged to 0.01V, 0.02C was discharged to 0.005V, and 0.2C was charged to 1.5V; in a third cycle, 0.5C was discharged to 0.01V, 0.05C was stepwise discharged to 0.01V, 0.05C was discharged to 0.005V, and 0.5C was charged to 1.5V; in a fourth cycle to fiftieth cycle, 1C was discharged to 0.01V, 0.1C was stepwise discharged to 0.01V, 0.1C was discharged to 0.005V, and 1C was charged to 1.5V; and in a fifty-first cycle, 0.1C was discharged to 0.01V, 0.01C was stepwise discharged to 0.01V, and 0.01C was discharged to 0.005V.

Full Cell Performance Test: a 18650 small cylindrical battery was used for preforming an full electrical performance test, a silicon-based material and graphite were compounded according to the capacity of 450 mAh/g, and a related performance test was completed according to a method specified by the national standard GB/T31486-2015.

## Example 1

A method for preparing an anode material includes following steps.

(1) Silicon monoxide was coated with graphite to obtain 1000g precursor (a mass content of carbon element was 5wt.%), and the precursor was rinsed with deionized water for 30 min, then vacuum dried for 12h at a drying temperature of 75 °C, and then sieved to obtain the precursor with target particle size.

(2) The precursor was added into a bias voltage table in a plasma reaction chamber, vacuumized to below 0.1 Pa, a modified gas phase source was introduced with the flow rate was 3000 ml/min, the modified gas phase source was a mixed gas of hydrogen, argon, ammonia, hydrogen sulfide and chlorine, and a volume ratio of hydrogen, argon, ammonia, hydrogen sulfide and chlorine is 1: 1: 0.2: 0.03: 0.01; by controlling the pressure in the reaction chamber to be 2000 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 2000 Pa, reacted for 24h, the reaction temperature was controlled between 450°C to 500°C to obtain a modified product.

(3) The modified product was sieved and dried under vacuum at 75 °C for 12h to obtain an anode material final product.

The specific electrochemical properties of the anode material final product prepared in Example 1 are shown in Table 2.

The anode material final product prepared in Example 1 includes a silicon-based active material and a carbon material, the carbon material is located on at least part of the surface of the silicon-based active material, the anode material contains the hydrogen element, the halogen element, the nitrogen element and the sulfur element, and the specific test data is shown in Table 1.

In addition, the anode material final product prepared in Example 1 has following characteristics: the median particle size is 5.3 $\mu$m, the carbon content is 4.95 wt.%, the tap density is 0.98 g/cm$^3$, the water content is 0.21%, pH=9.63, the specific surface area is 1.88 m$^2$/g.

In addition, the anode material final product prepared in Example 1 respectively has 1 pore volume characteristic peak in ranges of 240Å to 280Å, 290Å to 320Å, 340Å to 390Å and 410Å to 460Å of the pore size, respectively, the detail is shown in FIG. 4.

## Example 2

A method for preparing an anode material includes following steps.

(1) Lithium-doped silicon monoxide was coated with graphene to obtain 1000g precursor (a mass content of carbon element was 5wt.%), and the precursor was centrifuged and rinsed with deionized water for 2h, then vacuum dried for 24h at a drying temperature of 80 °C, and then sieved to obtain the precursor with target particle size.

(2) The precursor was added into a bias voltage table in a plasma reaction chamber, vacuumized to below 0.1 Pa, a modified gas phase source was introduced with the flow rate was 3000 ml/min, the modified gas phase source was a mixed gas of hydrogen, argon, ammonia, hydrogen sulfide and carbon tetrafluoride, and a volume ratio is 1: 1: 0.1: 0.05: 0.05; by controlling the pressure in the reaction chamber to be 2000 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 2000 Pa, reacted for 24h, the reaction temperature was controlled between 450°C to 500°C to obtain a modified product.

(3) The modified product was sieved and further dried under vacuum at 75 °C for 12h to obtain an anode material final product.

The specific electrochemical properties of the anode material final product prepared in Example 2 are shown in Table 2.

The anode material final product prepared in Example 2 includes a silicon-based active material and a carbon material, the carbon material is located on at least part of the surface of the silicon-based active material, the anode material contains the hydrogen element, the halogen element, the nitrogen element and the sulfur element, and the specific test data is shown in Table 1.

The anode material final product prepared in Example 2 has following characteristics: the median particle size is 5.62 $\mu$m, the carbon content is 5.01 wt.%, the tap density is 0.98 g/cm$^3$, the water content is 0.17%, pH=10.47, the specific surface area is 1.92 m$^2$/g.

In addition, the anode material final product prepared in Example 2 respectively has 1 pore volume characteristic peak in ranges of 240Å to 280Å, 290Å to 320Å, 340Å to 390Å and 410Å to 460Å of the pore size, respectively.

**Example 3**

A method for preparing an anode material includes following steps.

(1) Silicon monoxide was coated with graphite to obtain 1000g precursor (a mass content of carbon element was 5wt.%), and the precursor was rinsed with deionized water for 30 min, then vacuum dried for 12h at a drying temperature of 75 °C, and then sieved to obtain the precursor with target particle size.

(2) The precursor was added into a bias voltage table in a reaction chamber, vacuumized to below 0.1 Pa, a modified gas phase source was introduced with the flow rate was 3000 ml/min, the modified gas phase source was a mixed gas of hydrogen, argon, ammonia, hydrogen sulfide and hydrogen bromide, and a volume ratio is 1:1:0.15:0.03:0.03, by controlling the pressure in the reaction chamber to be 3000 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 3000 Pa, reacted for 24h, the reaction temperature was controlled between 650°C to 700°C to obtain a modified product.

(3) The modified product was sieved and further dried under vacuum at 75 °C for 12h to form an anode material final product.

The specific electrochemical properties of the anode material final product prepared in Example 3 are shown in Table 2.

The anode material final product prepared in Example 3 includes a silicon-based active material and a carbon material, the carbon material is located on at least part of the surface of the silicon-based active material, the anode material contains the hydrogen element, the halogen element, the nitrogen element and the sulfur element, and the specific test data is shown in Table 1.

The anode material final product prepared in Example 3 has following characteristics: the median particle size is 5.12 $\mu$m, the carbon content is 4.95 wt.%, the tap density is 0.98 g/cm$^3$, the water content is 0.07%, pH=9.51, the specific surface area is 2.49 m$^2$/g.

In addition, the anode material final product prepared in Example 3 respectively has 1 pore volume characteristic peak in ranges of 240Å to 280Å, 290Å to 320Å, 340Å to 390Å and 410Å to 460Å of the pore size, respectively.

**Example 4**

A method for preparing an anode material includes following steps.

(1) Lithium-doped silicon monoxide was coated with graphite to obtain 1000g precursor (a mass content of carbon element was 5wt.%), and the precursor was centrifuged and rinsed with deionized water for 2h, then vacuum dried for 24h at a drying temperature of 80 °C, and then sieved to obtain the precursor with target particle size.

(2) The precursor was added into a bias voltage table in a reaction chamber, vacuumized to below 0.1 Pa, a modified gas phase source was introduced with the flow rate was 3000 ml/min, the modified gas phase source was a mixed gas of hydrogen, argon, ammonia, hydrogen sulfide and hydrogen iodide, and a volume ratio is 1:1.5:0.05:0.01:0.01; by controlling the pressure in the reaction chamber to be 3000 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 3000 Pa, reacted for 24h, the reaction temperature was controlled between 700°C to 750°C to obtain a modified product.

(3) The modified product was sieved and further dried under vacuum at 75 °C for 12h to form an anode material final product.

The specific electrochemical properties of the anode material final product prepared in Example 4 are shown in Table 2.

The anode material final product prepared in Example 4 includes a silicon-based active material and a carbon material, the carbon material is located on at least part of the surface of the silicon-based active material, the anode material contains the hydrogen element, the halogen element, the nitrogen element and the sulfur element, and the specific test data is shown in Table 1.

The anode material final product prepared in Example 4 has following characteristics: the median particle size is 5.35 $\mu$m, the carbon content is 4.95 wt.%, the tap density is 0.98 g/cm$^3$, the water content is 0.17%, pH=10.47, the specific surface area is 1.92 m$^2$/g.

In addition, the anode material final product prepared in Example 4 respectively has 1 pore volume characteristic peak in ranges of 240Å to 280Å, 290Å to 320Å, 340Å to 390Å and 410Å to 460Å of the pore size, respectively.

**Example 5**

A method for preparing an anode material includes following steps.

(1) Silicon monoxide was coated with graphite to obtain 1000g precursor, and the precursor was rinsed with deionized water for 30 min, then vacuum dried for 12h at a drying temperature of 75 °C, and then sieved to obtain the precursor with target particle size.

(2) The precursor was added into a bias voltage table in a reaction chamber, vacuumized to below 0.1 Pa, a modified gas phase source was introduced with the flow rate was 3000 ml/min, the modified gas phase source was a mixed gas of hydrogen, argon, ammonia, hydrogen sulfide and chlorine, and a volume ratio is 1:1:0.05:0.015:0.05; by controlling the pressure in the reaction chamber to be 3000 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 3000 Pa, reacted for 24h, the reaction temperature was controlled between 650°C to 700°C to obtain a modified product.

(3) The modified product was sieved and further dried under vacuum at 75 °C for 12h to form an anode material final product.

The specific electrochemical properties of the anode material final product prepared in Example 5 are shown in Table 2.

The anode material final product prepared in Example 5 includes a silicon-based active material and a carbon material, the carbon material is located on at least part of the surface of the silicon-based active material, the anode material contains the hydrogen element, the halogen element, the nitrogen element and the sulfur element, and the specific test data is shown in Table 1.

The anode material final product prepared in Example 5 has following characteristics: the median particle size is 5.08 $\mu$m, the carbon content is 5.32 wt.%, the tap density is 0.98 g/cm$^3$, the water content is 0.05%, pH=9.45, the specific surface area is 2.23 m$^2$/g.

In addition, the anode material final product prepared in Example 5 respectively has 1 pore volume characteristic peak in ranges of 240Å to 280Å, 290Å to 320Å, 340Å to 390Å and 410Å to 460Å of the pore size, respectively.

**Example 6**

A method for preparing an anode material includes following steps.

(1) a mixed material of the silicon monoxide and the lithium silicate was coated with a mixture of graphite and graphene to obtain 1000g precursor (a mass content of carbon element was 5wt.%), and the precursor was rinsed with deionized water for 30 min, then vacuum dried for 10h at a drying temperature of 80 °C, and then sieved to obtain the precursor with target particle size.

(2) The precursor was added into a bias voltage table in a reaction chamber, vacuumized to below 0.1 Pa, a modified gas phase source was introduced with the flow rate was 5000 ml/min, the modified gas phase source was a mixed gas of hydrogen, argon, ammonia, hydrogen sulfide and chlorine, and a volume ratio is 1: 5: 0.3: 0.015: 0.01; by controlling the pressure in the reaction chamber to be 2000 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 2000 Pa, reacted for 24h, the reaction temperature was controlled between 450°C to 500°C to obtain a modified product.

(3) The modified product was sieved and further dried under vacuum at 75 °C for 12h to form an anode material final product.

The specific electrochemical properties of the anode material final product prepared in Example 6 are shown in Table 2.

The anode material final product prepared in Example 6 includes a silicon-based active material and a carbon material, the carbon material is located on at least part of the surface of the silicon-based active material, the anode material contains the hydrogen element, the halogen element, the nitrogen element and the sulfur element, and the specific test data is shown in Table 1.

The anode material final product prepared in Example 6 has following characteristics: the median particle size is 8.4 $\mu$m, the carbon content is 4.89 wt.%, the tap density is 0.95 g/cm$^3$, the water content is 0.08%, pH=9.55, the specific surface area is 1.54 m$^2$/g.

In addition, the anode material final product prepared in Example 6 respectively has 1 pore volume characteristic peak in ranges of 240Å to 280Å, 290Å to 320Å, 340Å to 390Å and 410Å to 460Å of the pore size, respectively.

**Example 7**

A method for preparing an anode material includes following steps.

(1) Silicon monoxide was coated with amorphous carbon to obtain 1000g precursor (a mass content of carbon element was 5wt.%), and the precursor was rinsed with deionized water for 30 min, then vacuum dried for 12h at a drying temperature of 75 °C, and then sieved to obtain the precursor with target particle size.

(2) The precursor was added into a bias voltage table in a reaction chamber, vacuumized to below 0.1 Pa, a modified gas phase source was introduced with the flow rate was 3000 ml/min, the modified gas phase source was a mixed gas of hydrogen, argon, nitrogen, hydrogen sulfide and iodine, and a volume ratio is 1:5:0.05:0.2:0.1; by controlling the pressure in the reaction chamber to be 5000 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 3000 Pa, reacted for 24h, the reaction temperature was controlled between 500°C to 800°C to obtain a modified product.

(3) The modified product was sieved and further dried under vacuum at 75 °C for 12h to form an anode material final product.

The specific electrochemical properties of the anode material final product prepared in Example 7 are shown in Table 2.

The anode material final product prepared in Example 7 includes a silicon-based active material and a carbon material, the carbon material is located on at least part of the surface of the silicon-based active material, the anode material contains the hydrogen element, the halogen element, the nitrogen element and the sulfur element, and the specific test data is shown in Table 1.

The anode material final product prepared in Example 7 has following characteristics: the median particle size is 5.5 $\mu$m, the carbon content is 6.54 wt.%, the tap density is 0.98 g/cm$^3$, the water content is 0.21%, the powder conductivity (under 20 kN) is 4.39 S/cm, pH=9.63, the specific surface area is 1.88 m$^2$/g.

In addition, the anode material final product prepared in Example 7 respectively has 1 pore volume characteristic peak in ranges of 240Å to 280Å, 290Å to 320Å, 340Å to 390Å and 410Å to 460Å of the pore size, respectively.

**Example 8**

A method for preparing an anode material includes following steps.

(1) Magnesium-doped silicon monoxide was coated with graphite to obtain 1000g precursor (a mass content of carbon element was 5wt.%), and the precursor was rinsed with deionized water for 30 min, then vacuum dried for 12h at a drying temperature of 75 °C, and then sieved to obtain the precursor with target particle size.
(2) The precursor was added into a bias voltage table in a reaction chamber, vacuumized to below 0.1 Pa, a modified gas phase source was introduced with the flow rate was 3000 ml/min, the modified gas phase source was a mixed gas of hydrogen, argon, nitrogen, hydrogen sulfide and chlorine, and a volume ratio is 1: 1: 0.15: 0.01: 0.015; by controlling the pressure in the reaction chamber to be 2000 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 2000 Pa, reacted for 24h, the reaction temperature was controlled between 450°C to 500°C to obtain a modified product.
(3) The modified product was sieved and further dried under vacuum at 75 °C for 12h to form an anode material final product.

The specific electrochemical properties of the anode material final product prepared in Example 8 are shown in Table 2.

The anode material final product prepared in Example 8 includes a silicon-based active material and a carbon material, the carbon material is located on at least part of the surface of the silicon-based active material, the anode material contains the hydrogen element, the halogen element, the nitrogen element and the sulfur element, and the specific test data is shown in Table 1.

The anode material final product prepared in Example 8 has following characteristics: the median particle size is 5.13 $\mu$m, the carbon content is 4.98 wt.%, the tap density is 0.98 g/cm$^3$, the water content is 0.22%, pH=9.61, the specific surface area is 1.85 m$^2$/g.

In addition, the anode material final product prepared in Example 8 respectively has 1 pore volume characteristic peak in ranges of 240Å to 280Å, 290Å to 320Å, 340Å to 390Å and 410Å to 460Å of the pore size, respectively.

**Example 9**

A method for preparing an anode material includes following steps.

(1) the mixed material of lithium aluminum-doped silicon monoxide was coated with graphite to obtain 1000g precursor (a mass content of carbon element was 5wt.%), and the precursor was rinsed with deionized water for 30 min, then vacuum dried for 12h at a drying temperature of 75 °C, and then sieved to obtain the precursor with target particle size.
(2) The precursor was added into a bias voltage table in a reaction chamber, vacuumized to below 0.1 Pa, a modified gas phase source was introduced with the flow rate was 3000 ml/min, the modified gas phase source was a mixed gas of hydrogen, argon, nitrogen, ammonia, hydrogen sulfide, chlorine and iodine, and a volume ratio is 1: 1: 0.005: 0.005: 0.04: 0.005: 0.005; by controlling the pressure in the reaction chamber to be 2000 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 2000 Pa, reacted for 24h, the reaction temperature was controlled between 450°C to 500°C to obtain a modified product.
(3) The modified product was sieved and further dried under vacuum at 75 °C for 12h to form an anode material final product.

The specific electrochemical properties of the anode material final product prepared in Example 9 are shown in Table 2.

The anode material prepared in Example 9 includes a silicon-based active material and a carbon material, the carbon material is located on at least part of the surface of the silicon-based active material, the anode material contains the hydrogen element, the halogen element, the nitrogen element and the sulfur element, and the specific test data is shown in Table 1.

The anode material prepared in Example 9 further has following characteristics: the median particle size is 5.18 $\mu$m, the carbon content is 4.99 wt.%, the tap density is 0.98 g/cm$^3$, the water content is 0.15%, pH=9.83, the specific surface area is 1.98 m$^2$/g.

In addition, the anode material final product prepared in Example 9 respectively has 1 pore volume characteristic peak in ranges of 240Å to 280Å, 290Å to 320Å, 340Å to 390Å and 410Å to 460Å of the pore size, respectively.

**Comparative Example 1**

It differs from Example 1 that, there is no plasma treatment.

The anode material prepared in Comparative Example 1 further has following characteristics: the median particle size is 5.21 $\mu$m, the carbon content is 4.98 wt.%, the tap density is 0.98 g/cm$^3$, the water content is 0.25%, pH=9.69, the specific surface area is 1.81 m$^2$/g.

In addition, the anode material final product prepared in Comparative Example 1 has a large broad peak in the range of 240Å to 460Å.

**Comparative Example 2**

A method for preparing an anode material includes following steps.

It differs from Example 2 as follows.

(2) The precursor was added into a bias voltage table in a reaction chamber, vacuumized to below 0.1 Pa, a modified gas phase source was introduced with the flow rate was 3000 ml/min, the modified gas phase source was a mixed gas of hydrogen, argon, ammonia and hydrogen sulfide, and a volume ratio is 0.5: 1: 1: 1; by controlling the pressure in the reaction chamber to be 4000 Pa through a vacuum pump, plasma was activated to generate plasma light, and simultaneously a bias voltage of -500V was introduced for a reaction platform in the reaction chamber, after the plasma was stabilized, further the pressure was adjusted in the reaction chamber to keep the pressure in the reaction chamber at 2000 Pa, reacted for 24h, the reaction temperature was measured between 450°C to 500°C to obtain a modified product.

The anode material prepared in Comparative Example 2 has following characteristics: the median particle size is 5.38 $\mu$m, the carbon content is 5.05 wt.%, the tap density is 0.98 g/cm$^3$, the water content is 0.13%, pH=10.47, the specific surface area is 1.92 m$^2$/g.

In addition, the anode material final product prepared in Comparative Example 2 respectively has 1 pore volume characteristic peak in ranges of 290Å to 320Å, 340Å to 390Å and 410Å to 460Å of the pore size, respectively.

**Comparative Example 3**

A method for preparing an anode material includes following steps.

It differs from Example 2 as follows.

(2) The precursor was added into a bias voltage table in a plasma reaction chamber, vacuumized to below 0.1 Pa, a modified gas phase source was introduced with the flow rate was 2000 ml/min, the modified gas phase source was a mixed gas of hydrogen, argon, ammonia and carbon tetrafluoride, and a volume ratio is 1: 1: 0.1: 0.03; by controlling the pressure in the reaction chamber to be 1500 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 1500 Pa, reacted for 24h, the reaction temperature was controlled between 400°C to 450°C to obtain a modified product.

The anode material final product prepared in Comparative Example 3 has following characteristics: the median particle size is 5.36 $\mu$m, the carbon content is 4.96 wt.%, the tap density is 0.97 g/cm$^3$, the water content is 0.09%, pH=9.53, the specific surface area is 1.99 m$^2$/g.

In addition, the anode material final product prepared in Comparative Example 3 respectively has 1 pore volume characteristic peak in ranges of 290Å to 320Å, 340Å to 390Å and 410Å to 460Å of the pore size, respectively.

**Comparative Example 4**

A method for preparing an anode material includes following steps.

It differs from Example 2 as follows.

(2) The precursor was added into a bias voltage table in a plasma reaction chamber, vacuumized to below 0.1 Pa, a modified gas phase source was introduced with the flow rate was 2000 ml/min, the modified gas phase source was a mixed gas of hydrogen, argon and ammonia, and a volume ratio is 1: 1: 0.03; by controlling the pressure in the reaction chamber to be 1500 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 1500 Pa, reacted for 24h, the reaction temperature was controlled between 400°C to 450°C to obtain a modified product.

The anode material final product prepared in Comparative Example 4 has following characteristics: the median particle size is 5.03 $\mu$m, the carbon content is 5.55 wt.%, the tap density is 0.98 g/cm$^3$, the water content is 0.20%, pH=9.38, the specific surface area is 1.79 m$^2$/g.

In addition, the anode material final product prepared in Comparative Example 4 respectively has 1 pore volume characteristic peak in ranges of 290Å to 320Å, 340Å to 390Å and 410Å to 460Å of the pore size, respectively.

## Comparative Example 5

A method for preparing an anode material includes following steps.

It differs from Example 2 as follows.

(2) The precursor was added into a bias voltage table in a plasma reaction chamber, vacuumized to below 0.1 Pa, a modified gas phase source was introduced with the flow rate was 2000 ml/min, the modified gas phase source was a mixed gas of hydrogen, argon, ammonia, hydrogen sulfide and carbon tetrafluoride, and a volume ratio is 1: 1: 0.01: 0.03: 0.01; by controlling the pressure in the reaction chamber to be 2000 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 2000 Pa, reacted for 24h, the reaction temperature was controlled between 400°C to 450°C to obtain a modified product.

The anode material final product prepared in Comparative Example 5 has following characteristics: the median particle size is 5.58 $\mu$m, the carbon content is 5.65 wt.%, the tap density is 0.98 g/cm$^3$, the water content is 0.18%, pH=9.7, the specific surface area is 2.18 m$^2$/g.

In addition, the anode material final product prepared in Comparative Example 5 respectively has 1 pore volume characteristic peak in ranges of 240Å to 280Å, 290Å to 320Å, 340Å to 390Å and 410Å to 460Å of the pore size, respectively.

## Comparative Example 6

A method for preparing an anode material includes following steps.

It differs from Example 2 as follows.

(2) The precursor was added into a bias voltage table in a plasma reaction chamber, vacuumized to below 0.1 Pa, a modified gas phase source was introduced with the flow rate was 4000 ml/min, the modified gas phase source was a mixed gas of hydrogen, argon, ammonia and carbon tetrafluoride, and a volume ratio is 1: 1: 0.05: 0.02; by controlling the pressure in the reaction chamber to be 3000 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 3000 Pa, reacted for 24h, the reaction temperature was controlled between 450°C to 500°C to obtain a modified product.

The anode material final product prepared in Comparative Example 6 has following characteristics: the median particle size is 5.6 $\mu$m, the carbon content is 4.96 wt.%, the tap density is 0.98 g/cm$^3$, the water content is 0.22%, pH=9.83, the specific surface area is 1.90 m$^2$/g.

In addition, the anode material final product prepared in Comparative Example 6 respectively has 1 pore volume characteristic peak in ranges of 290Å to 320Å, 340Å to 390Å and 410Å to 460Å of the pore size, respectively.

## Comparative Example 7

A method for preparing an anode material includes following steps.

It differs from Example 2 as follows.

(2) The precursor was added into a bias voltage table in a plasma reaction chamber, vacuumized to below 0.1 Pa, a modified gas phase source was introduced with the flow rate was 1500 ml/min, the modified gas phase source was a mixed gas of hydrogen, argon, hydrogen sulfide and carbon tetrafluoride, and a volume ratio is 1: 1: 0.05: 0.01; by controlling the pressure in the reaction chamber to be 1000 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 1000 Pa, reacted for 24h, the reaction temperature was controlled between 250°C to 300°C to obtain a modified product.

The anode material final product prepared in Comparative Example 7 has following characteristics: the median particle size is 5.14 $\mu$m, the carbon content is 4.75 wt.%, the tap density is 0.98 g/cm$^3$, the water content is 0.09%, pH=9.43, the specific surface area is 1.68 m$^2$/g.

In addition, the anode material final product prepared in Comparative Example 7 has a large broad peak in the range of 240Å to 460Å.

**Comparative Example 8**

A method for preparing an anode material includes following steps.

It differs from Example 2 as follows.

(2) The precursor was added into a bias voltage table in a plasma reaction chamber, vacuumized to below 0.1 Pa, a modified gas phase source was introduced with the flow rate was 3000 ml/min, the modified gas phase source was a mixed gas of hydrogen, argon and hydrogen sulfide, and a volume ratio is 1: 1: 0.05; by controlling the pressure in the reaction chamber to be 2000 Pa through a vacuum pump, plasma was activated to generate plasma light, and simultaneously a bias voltage of -200V was introduced for a reaction platform in the reaction chamber, after the plasma was stabilized, further the pressure was adjusted in the reaction chamber to keep the pressure in the reaction chamber at 2000 Pa, reacted for 24h, the reaction temperature was controlled between 350°C to 450°C to obtain a modified product.

The anode material final product prepared in Comparative Example 8 has following characteristics: the median particle size is 5.37 $\mu$m, the carbon content is 4.96 wt.%, the tap density is 0.98 g/cm$^3$, the water content is 0.20%, pH=9.61, the specific surface area is 1.93 m$^2$/g.

In addition, the anode material final product prepared in Comparative Example 8 has a large broad peak in the range of 240Å to 460Å.

The anode materials prepared in Examples 1-9 and Comparative Examples 1-8 are listed in Tables 1 and 2 with corresponding sample numbers S1-S9 and R1-R8.

**Table 1:** The content and proportion of non-metallic elements in the anode materials corresponding to Examples 1-9 and Comparative Examples 1-8

| Sample | $m_X$ (mg/kg) | $m_N$ (mg/kg) | ms (mg/kg) | $m_X/m_H$ | $m_N/m_H$ | $m_S/m_H$ |
|---|---|---|---|---|---|---|
| S1 | 140.54 | 3606.29 | 77.19 | 0.211 | 5.415 | 0.116 |
| S2 | 1303.86 | 2223.01 | 153.01 | 2.841 | 4.843 | 0.333 |
| S3 | 606.36 | 2921.47 | 46.22 | 1.353 | 6.521 | 0.103 |
| S4 | 90.64 | 1117.9 | 26.33 | 0.338 | 4.171 | 0.098 |
| S5 | 1006.36 | 2874.22 | 37.99 | 1.499 | 4.281 | 0.566 |
| S6 | 50.01 | 3908.282 | 180.036 | 0.020 | 1.563 | 0.072 |
| S7 | 1498.22 | 207.84 | 199.46 | 4.974 | 0.690 | 0.662 |
| S8 | 342.61 | 3998.69 | 10.03 | 1.708 | 19.93 | 0.050 |
| S9 | 97.36 | 98.87 | 108.45 | 4.473 | 4.543 | 4.983 |
| R1 | 34.27 | 55.27 | 9.06 | 0.011 | 0.018 | 0.003 |
| R2 | 2706.87 | 6679.87 | 2979.89 | 25.780 | 63.618 | 28.380 |
| R3 | 725.41 | 4803.83 | 6.77 | 3.645 | 24.138 | 0.034 |
| R4 | 1.98 | 1993.67 | 8.66 | 0.011 | 11.054 | 0.048 |
| R5 | 241.22 | 789.44 | 103.42 | 6.743 | 22.068 | 2.891 |
| R6 | 432.65 | 3230.79 | 5.16 | 2.182 | 16.294 | 0.026 |
| R7 | 92.08 | 1.54 | 179.43 | 0.838 | 0.014 | 1.633 |
| R8 | 0.66 | 165.47 | 130.49 | 0.013 | 3.245 | 2.559 |

Table 2: The electrochemical performance characterization of the anode material products prepared in Examples 1-9 and Comparative Examples 1-8

| Sample | Capacity mAh/g | Initial Coulombic Efficiency (%) | Power Conductivity (S/cm) | Capacity Retention Rate For 50 Weeks Of Coin-cell | Electrode Piece Expansion Rate After Coin-cell Cycle | -25 °C Capacity Retention Rate | Rate Charging 1C/0.5C | Rate Charging 2C/0.5C | Rate Charging 3C/0.5C |
|---|---|---|---|---|---|---|---|---|---|
| S1 | 1639.9 | 78.18 | 4.39 | 89.91% | 34.19% | 90.12% | 88.67% | 78.39% | 60.77% |
| S2 | 1422.9 | 91.98 | 5.12 | 90.43% | 34.22% | 90.59% | 90.87% | 80.29% | 61.33% |
| S3 | 1622.7 | 77.96 | 6.19 | 90.31% | 34.39% | 90.43% | 91.01% | 81.64% | 60.55% |
| S4 | 1439.1 | 92.20 | 4.40 | 88.26% | 34.37% | 90.22% | 89.21% | 77.37% | 60.40% |
| S5 | 1655.3 | 79.22 | 7.33 | 90.45% | 34.05% | 90.44% | 89.34% | 80.22% | 61.02% |
| S6 | 1430.2 | 92.00 | 5.23 | 90.54% | 34.15% | 90.25% | 88.79% | 79.21% | 60.33% |
| S7 | 1633.5 | 77.55 | 4.05 | 90.54% | 34.15% | 90.25% | 88.79% | 79.21% | 60.33% |
| S8 | 1351.7 | 85.35 | 3.99 | 88.27% | 34.79% | 90.01% | 87.23% | 77.90% | 59.29% |
| S9 | 1320.8 | 84.92 | 3.57 | 88.03% | 35.01% | 90.00% | 87.52% | 78.20% | 60.09% |
| R1 | 1597.3 | 75.21 | 0.87 | 82.37% | 38.27% | 85.31% | 79.22% | 69.01% | 52.33% |
| R2 | 1379.2 | 91.45 | 0.93 | 80.92% | 38.55% | 86.22% | 78.95% | 68.50% | 51.99% |
| R3 | 1321.7 | 89.22 | 0.50 | 82.55% | 37.23% | 83.27% | 79.39% | 68.32% | 50.11% |
| R4 | 1333.5 | 88.39 | 0.37 | 82.69% | 37.30% | 82.97% | 79.69% | 66.79% | 50.07% |
| R5 | 1317.9 | 89.10 | 0.51 | 81.98% | 38.99% | 82.83% | 79.72% | 68.92% | 50.34% |
| R6 | 1310.3 | 87.29 | 0.29 | 82.33% | 40.95% | 82.09% | 79.88% | 69.03% | 50.29% |
| R7 | 1325.8 | 87.99 | 0.31 | 82.79% | 40.97% | 82.77% | 79.85% | 68.99% | 49.27% |
| R8 | 1300.9 | 86.69 | 0.18 | 83.09% | 40.38% | 81.99% | 79.07% | 69.19% | 49.86% |

Combining Table 1 and Table 2, comparing Examples 1-9 with Comparative Examples 1-8, it can be concluded that: Surface modification treatment is performed on the anode material by using plasma enhanced chemical vapor deposition, the mass content ratio of the hydrogen element, the nitrogen element, the sulfur element and the halogen element in the anode material is regulated and controlled, and the capacity, the initial coulombic efficiency, the powder conductivity, the cycle performance and the rate performance of the anode material can be improved.

Specifically, by comparing Example 1 with Comparative Example 1, it can be concluded that: Surface modification treatment is performed on the anode material by using plasma enhanced chemical vapor deposition, the mass content ratio of the hydrogen element, the nitrogen element, the sulfur element and the halogen element in the anode material is regulated and controlled, and the capacity, the initial coulombic efficiency, the powder conductivity, the cycle performance and the rate performance of the anode material can be comprehensively improved.

By comparing Comparative Examples 2-8 with Example 2, it can be concluded that: In order to greatly improve the capacity, the initial coulombic efficiency, the powder conductivity, the cycle performance and the rate performance of the anode material, the mass content ratio of the hydrogen element, the nitrogen element, the sulfur element and the halogen element in the anode material needs to be regulated and controlled to a appropriate range.

The above are merely preferred embodiments of the present disclosure and are not intended to limit the present disclosure. It should be noted that any modifications, equivalent substitutions, improvements, and the like made within the spirit and principle of the present disclosure shall fall within the scope of the present disclosure.

**Claims**

1. Anode material, comprising a silicon-based active material and a matrix material, wherein hydrogen element, halogen element, nitrogen element, and sulfur element are contained in the anode material, wherein a mass content of the hydrogen element is denoted as $m_H$, a mass content of the halogen element is denoted as $m_X$, a mass content of the sulfur element is denoted as $m_S$, and a mass content of the nitrogen element is denoted as $m_N$, and following relational expressions are satisfied: $0.02 \leq m_X/m_H \leq 5.00$, $0.02 \leq m_N/m_H \leq 20.00$, and $0.05 \leq m_S/m_H \leq 5.00$.

2. The anode material according to claim 1, wherein the anode material has at least one of following features:

   (1) the matrix material is formed on at least part of a surface of the silicon-based active material;
   (2) the silicon-based active material is formed on a surface of the matrix material; and
   (3) the silicon-based active material and the matrix material are mutually dispersed.

3. The anode material according to claim 1, wherein the anode material satisfies at least one of following features:

   (1) the anode material contains pores; and
   (2) in a pore volume distribution curve of the anode material, the anode material has a pore volume characteristic peak in ranges of 240Å to 280Å, 290Å to 320Å, 340Å to 390Å and 410Å to 460Å of the pore size, respectively.

4. The anode material according to claim 1, wherein the anode material satisfies at least one of following features:

   (1) in the anode material,

   $$50\text{mg/kg} \leq m_X \leq 1500\text{mg/kg};$$

   (2) in the anode material,

   $$100\text{mg/kg} \leq m_N \leq 4000\text{mg/kg};$$

   and
   (3) in the anode material,

   $$10\text{mg/kg} \leq m_S \leq 200\text{mg/kg}.$$

5. The anode material according to claim 1, wherein the anode material satisfies at least one of following features:

   (1) the silicon-based active material comprises at least one of elemental silicon, silicon oxide, silicon alloy, and silicate; and
   (2) the silicon-based active material comprises silicon oxide, and the silicon oxide has a general formula of $SiO_x$, where $0 < x \leq 2$.

6. The anode material according to claim 1, wherein the anode material satisfies at least one of following features:

   (1) the silicon-based active material comprises a doping metal M, and M is selected from at least one of Li, Mg, Al, Fe, La, Zn, Ti, Cu, and Mn; and
   (2) the silicon-based active material comprises a doping metal M, and a mass content of the metal M in the anode material is >0 wt.% and ≤15 wt.%.

7. The anode material according to claim 1, wherein the anode material satisfies at least one of following features:

   (1) the matrix material comprises a carbon material or a mixture of a carbon material and an inorganic oxide;
   (2) the matrix material comprises a carbon material, the carbon material includes at least one of graphite, graphene, amorphous carbon, diamond-like carbon, carbon nanotube, and carbon fiber; and
   (3) the matrix material comprises a carbon material, the carbon material is formed on at least part of a surface of the silicon-based active material to form a carbon layer, and a thickness of the carbon layer is 20 nm to 1000 nm.

8. The anode material according to claim 7, wherein a mass content of the carbon element in the anode material is 0.5 wt.% to 15 wt.% based on a mass of the anode material.

9. The anode material according to claim 1, wherein the anode material has a median particle size ranging from 2.0 $\mu$m to 12.0 $\mu$m.

10. The anode material according to claim 1, wherein the anode material has a specific surface area ranging from 0.50 $m^2$/g to 10.00 $m^2$/g.

11. The anode material according to claim 1, wherein the anode material has a tap density ranging from 0.75 g/$cm^3$ to 1.35 g/$cm^3$.

12. The anode material according to claim 1, wherein the anode material satisfies at least one of following features:

    (1) the anode material has a powder conductivity of 0.01 S/cm to 100.00 S/cm under a pressure of 20 kN;
    (2) a mass content of water in the anode material is 0.01 wt.% to 0.80 wt.%; and
    (3) the anode material has a pH ranging from 6.00 to 12.00.

13. A method for preparing an anode material, comprising following steps:

    preparing a precursor, wherein the precursor includes a silicon-based active material and a matrix material; and performing surface modification treatment on the precursor by using plasma enhanced chemical vapor deposition in a modified gas phase source environment to obtain an anode material, wherein the modified gas phase source includes hydrogen element, sulfur element, nitrogen element and halogen element; in the anode material, a mass content of the hydrogen element is denoted as $m_H$, a mass content of the halogen element is denoted as $m_X$, a mass content of the sulfur element is denoted as $m_S$, and a mass content of the nitrogen element is denoted as $m_N$, and following relational expressions are satisfied: $0.02 \leq m_X/m_H \leq 5.00$, $0.02 \leq m_N/m_H \leq 20.00$, and $0.05 \leq m_S/m_H \leq 5.00$.

14. A secondary battery, comprising the anode material according to any one of claims 1-12 or the anode material prepared by the method according to claim 13.

FIG. 1

| Preparing a precursor, the precursor includes a silicon-based active material and a substrate material |
|---|

| Performing surface modification treatment on the precursor by using plasma enhanced chemical vapor deposition in a modified gas phase source environment to obtain an anode material, wherein the modified gas phase source includes hydrogen element, sulfur element, nitrogen element and halogen element; in the anode material, a mass content of the hydrogen element is mH, a mass content of the halogen element is mX, a mass content of the sulfur element is mS, and a mass content of the nitrogen element is mN, and the following relational expressions are satisfied: $0.02 \leq m_X/m_H \leq 5.00$, $0.02 \leq mN/m_H \leq 20.00$, and $0.05 \leq m_S/m_H \leq 5.00$ |
|---|

FIG. 2

FIG. 3

FIG. 4

## INTERNATIONAL SEARCH REPORT

International application No.

**PCT/CN2024/124565**

### A. CLASSIFICATION OF SUBJECT MATTER

H01M4/48(2010.01)i; C01B32/168(2017.01)i; C01B33/32(2006.01)i; C01B33/22(2006.01)i; C01B33/26(2006.01)i; B82Y40/00(2011.01)i; H01M4/62(2006.01)i; H01M10/0525(2010.01)i; C01B33/02(2006.01)i; C01B33/12(2006.01)i; C01B33/20(2006.01)i; C01B32/21(2017.01)i; C01B32/184(2017.01)i; C01B32/05(2017.01)i

According to International Patent Classification (IPC) or to both national classification and IPC

### B. FIELDS SEARCHED

Minimum documentation searched (classification system followed by classification symbols)

IPC: H01M4/-, C01B32/-, C01B33/-, B82Y40/-, H01M10/-

Documentation searched other than minimum documentation to the extent that such documents are included in the fields searched

Electronic data base consulted during the international search (name of data base and, where practicable, search terms used)

CNTXT, ENTXTC, CNKI, ISI_WEB OF SCIENCE: 负极, 硅基, 碳材料, 氢, 卤素, 氟, 氯, 溴, 碘, 氮, 硫, 等离子体, 气相沉积, negative, silicon, carbon, hydrogen, fluorine, chlorine, bromine, iodine, halogen, nitrogen, sulfur, plasma, vapor deposition

### C. DOCUMENTS CONSIDERED TO BE RELEVANT

| Category* | Citation of document, with indication, where appropriate, of the relevant passages | Relevant to claim No. |
|---|---|---|
| PX | CN 117476921 A (BTR NEW MATERIAL GROUP CO., LTD. et al.) 30 January 2024 (2024-01-30) description, paragraphs [0006]-[0025] | 1-14 |
| A | CN 116470014 A (SUNWODA ELECTRIC VEHICLE BATTERY CO., LTD.) 21 July 2023 (2023-07-21) description, paragraphs [0044]-[0052] | 1-14 |
| A | CN 116864634 A (HUAZHONG UNIVERSITY OF SCIENCE AND TECHNOLOGY) 10 October 2023 (2023-10-10) entire description | 1-14 |
| A | JP 2014080647 A (SHIMIZU DENSETSU KOGYO KK) 08 May 2014 (2014-05-08) entire description | 1-14 |
| A | CN 104347858 A (HUAWEI TECHNOLOGIES CO., LTD.) 11 February 2015 (2015-02-11) entire description | 1-14 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 January 2025** | **13 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/124565**

| C. | DOCUMENTS CONSIDERED TO BE RELEVANT | |
|---|---|---|
| Category* | Citation of document, with indication, where appropriate, of the relevant passages | Relevant to claim No. |
| A | CN 113506861 A (BEIJING IAMETAL NEW ENERGY TECHNOLOGY CO., LTD. et al.) 15 October 2021 (2021-10-15) entire description | 1-14 |

Form PCT/ISA/210 (second sheet) (July 2022)

## INTERNATIONAL SEARCH REPORT
### Information on patent family members

International application No.

**PCT/CN2024/124565**

| Patent document cited in search report | | | Publication date (day/month/year) | Patent family member(s) | | | Publication date (day/month/year) |
|---|---|---|---|---|---|---|---|
| CN | 117476921 | A | 30 January 2024 | None | | | |
| CN | 116470014 | A | 21 July 2023 | None | | | |
| CN | 116864634 | A | 10 October 2023 | None | | | |
| JP | 2014080647 | A | 08 May 2014 | JP | 5956302 | B2 | 27 July 2016 |
| CN | 104347858 | A | 11 February 2015 | WO | 2015014120 | A1 | 05 February 2015 |
| CN | 113506861 | A | 15 October 2021 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 245332019 T
- GB 314862015 T